# EUROPÄISCHE PATENTSCHRIFT

(11) **EP 3 423 316 B1**
(45) Veröffentlichungstag und Bekanntmachung des Hinweises auf die Patenterteilung: **06.05.2020**
(21) Anmeldenummer: 17708213.8
(22) Anmeldetag: 01.03.2017
(51) Int. Cl.: B60T 8/34

(54) **BREMSANLAGE MIT ZWEI DRUCKBEREITSTELLUNGSEINRICHTUNGEN SOWIE VERFAHREN ZUM BETREIBEN EINER BREMSANLAGE**
BRAKE SYSTEM HAVING TWO PRESSURE-PROVIDING DEVICES AND METHOD FOR OPERATING A BRAKE SYSTEM
SYSTÈME DE FREINAGE COMPORTANT DEUX MOYENS DE GÉNÉRATION DE PRESSION ET PROCÉDÉ DE FONCTIONNEMENT D'UN SYSTÈME DE FREINAGE

(30) Priorität: 04.03.2016 DE 102016203563
(43) Veröffentlichungstag der Anmeldung: 09.01.2019
(73) Patentinhaber: Continental Teves AG & Co. OHG, 60488 Frankfurt am Main (DE)
(72) Erfinder: BESIER, Marco, 65307 Bad Schwalbach (DE); STAUDER, Peter, 55128 Mainz (DE); JUNGBECKER, Johann, 55576 Badenheim (DE); DRUMM, Stefan, 55291 Saulheim (DE); ROLL, Georg, 60438 Frankfurt (DE); BÖHM, Jürgen, 65558 Oberneisen (DE); LINHOFF, Paul, 61267 Neu-Anspach (DE)
(86) Internationale Anmeldenummer: PCT/EP2017/054683
(87) Internationale Veröffentlichungsnummer: WO 2017/148968

(56) Entgegenhaltungen:
- CN-A- 102 602 384
- DE-A1- 10 319 338
- DE-A1-102011 108 297
- DE-A1-102013 217 954

## Beschreibung

Die Erfindung betrifft eine Bremsanlage für ein Kraftfahrzeug mit vier hydraulischen Radbremsen, die jeweils einem Fahrzeugrad zugeordnet sind, mit einem Bremspedal, dem eine Wegsensorik zur Bremswunscherkennung zugeordnet ist, und mit einer ersten und einer zweiten Druckbereitstellungseinrichtung zum Bremsdruckaufbau in den Radbremsen, wobei die erste Druckbereitstellungseinrichtung hydraulisch über eine Radbremsleitung mit einer ersten einem ersten Bremskreis zugeordneten ersten Radbremse verbunden ist und über eine Radbremsleitung hydraulisch mit einer dem ersten Bremskreis zugeordneten zweiten Radbremse verbunden ist, und wobei die zweite Druckbereitstellungseinrichtung hydraulisch über eine Radbremsleitung mit einer ersten einem zweiten Bremskreis zugeordneten dritten Radbremse verbunden ist und hydraulisch über eine Radbremsleitung mit einer dem zweiten Bremskreis zugeordneten vierten Radbremse verbunden ist, wobei jede Druckbereitstellungseinrichtung jeweils von einer Steuer- und Regeleinheit angesteuert wird. Sie betrifft weiterhin ein Verfahren zum Betreiben einer Bremsanlage.

Eine derartige Bremsanlage, die in einer "Brake-by-Wire"-Betriebsart betrieben werden kann, wobei in den Bremskreisen aktiv Druck aufgrund einer Fahrerbremswunscherfassung aufgebaut werden kann und bei der zwei hydraulisch parallel geschaltete Bremsdruckerzeuger vorgesehen sind ist, ist aus der DE 10 2013 217 954 A1 bekannt, bei der Radbremsen von zwei Druckbereitstellungseinrichtungen mit Bremsflüssigkeit versorgt werden können. In einer Normalbetriebsart wird in jeweils einem von zwei Bremskreisen ausschließlich von jeweils einer Druckbereitstellungseinrichtung Bremsdruck aufgebaut. Bei Ausfall einer der beiden Druckbereitstellungseinrichtungen wird ein Kreistrennventil geschaltet, so dass von der noch funktionstüchtigen Druckbereitstellungseinrichtung in allen Radbremsen Bremsdruck aufgebaut werden kann.

Aus DE 103 19 338 A1 ist eine Bremsanlage bekannt mit zwei voneinander unabhängigen Bremskreisen und einer Druckpumpe je Bremskreis sowie einem von der Bremsanlage mechanisch / hydraulisch entkoppelten Bremspedal.

Es sind Bremssysteme bekannt, bei denen ein reguläres Hauptbremssystem den Systemdruckaufbau im normalen Bremsbetrieb übernimmt und ein Zusatzbremssystem für den Fall bereitsteht, dass die Systemdruckbereitstellungsfunktion des Hauptbremssystems ausgefallen ist. In dieser Situation übernimmt das Zusatzbremssystem den Druckaufbau.

Der Erfindung liegt die Aufgabe zugrunde, eine gattungsgemäße Bremsanlage in ihren Bremsdruckaufbaumöglichkeiten flexibel zu gestalten. Weiterhin soll ein Verfahren zum Betreiben einer derartigen Bremsanlage angegeben werden.

Diese Aufgabe wird erfindungsgemäß durch eine Bremsanlage gemäß Anspruch 1 und ein Verfahren gemäß Anspruch 11 gelöst.

In Bezug auf die Bremsanlage wird diese Aufgabe erfindungsgemäß dadurch gelöst, dass eine erste hydraulische Verbindungsleitung, in die ein stromlos offenes Trennventil geschaltet ist, eine erste Radbremsleitung des ersten Bremskreises mit einer ersten Radbremsleitung des zweiten Radbremskreises verbindet, und dass eine zweite hydraulische Verbindungsleitung, in die ein stromlos offenes Trennventil geschaltet ist, eine zweite Radbremsleitung des ersten Bremskreises mit einer zweiten Radbremsleitung des zweiten Radbremskreises verbindet.

Vorteilhafte Ausgestaltungen der Erfindung sind Gegenstand der Unteransprüche.

Die Erfindung geht von der Überlegung aus, dass es wünschenswert ist, präzise und kontrolliert in den beiden Bremskreisen einer Bremsanlage Bremsdruck aufzubauen. Insbesondere bei Fahrzeugen mit Rekuperationsbremse (reine Elektrofahrzeuge (FEL) oder Hybridfahrzeuge), aber auch bei Verbrennungsmotor-getriebenen Fahrzeugen ist es zusätzlich wünschenswert, unterschiedlichen Bremsdruck in den beiden Bremskreisen einstellen zu können durch sogenanntes Blending.

Dies geschieht bei aktiven Bremssystemen gewöhnlich dadurch, dass eine Druckbereitstellungseinrichtung einen Vordruck bereitstellt und über die Druckbereitstellungseinrichtung mit den Bremskreisen verbindenden oder trennenden Trennventile und/oder die der jeweiligen Bremse zugeordneten Einlass- und Auslassventile der jeweils geforderte Druck eingestellt wird.

Wie nunmehr erkannt wurde, kann ein Bremssystem, bei dem nicht nur eine sondern zwei separate Druckbereitstellungseinrichtungen bzw. Bremsdruckerzeuger vorhanden sind, nicht nur eine Redundanz für aktiven Druckaufbau bereitstellen. Es kann vielmehr auch dazu genutzt werden, in den beiden Bremskreisen jeweils unterschiedlich großen Bremsdruck zu erzeugen. Dabei baut eine der beiden Druckbereitstellungseinrichtungen in einem Normalbetrieb in einem der beiden Bremskreise Druck auf, während die andere Druckbereitstellungseinrichtung in dem anderen Bremskreis Bremsdruck aufbaut. Fällt dagegen eine der beiden Druckbereitstellungseinrichtungen aus, kann durch eine geeignete hydraulische Verschaltung von der anderen Druckbereitstellungseinrichtung weiterhin in allen Radbremsen radindividuell Druck aufgebaut werden.

Diese oben genannten Betriebsarten können erreicht werden durch den Einsatz von hydraulischen Verbindungsleitungen, die den Bremsmittelfluss von einer Radbremsleitung zu einer weiteren Radbremsleitung ermöglichen und einer bedarfsweisen hydraulischen Abtrennung der ausgefallenen Druckbereitstellungseinrichtung von den Radbremsen sowie die zielgerichtete Trennung dieser Verbindungsleitungen mit Hilfe von Trennventilen. Eine Redundanz kann weiterhin realisiert werden, diese kommt aber nur dann zum Tragen, wenn eine der beiden Bremsdruckerzeuger bzw. Druckbereitstellungseinrichtungen ausfällt.

Im Rahmen der vorliegenden Anmeldung bezeichnet ein Bremskreis einen hydraulischen Kreis, der an eine hydraulische Druckkammer, die ein oder zwei Druckräume umfassen kann, einer Druckbereitstellungseinrichtung angeschlossen ist.

In einer bevorzugten Ausführungsform bauen in einer Normalbetriebsart beide Druckbereitstellungseinrichtungen Bremsdruck auf, wobei wenigstens eine Steuer- und Regeleinheit die Trennventile in ihre Trennstellung schaltet, so dass jeweils eine Druckbereitstellungseinrichtung in den Radbremsen genau eines Bremskreises Druck aufbaut. Jeder der beiden Bremskreise wird somit von genau einer Druckbereitstellungseinrichtung bedient. Dadurch ist ein schneller und zielgerichteter Druckaufbau in den Radbremsen eines Bremskreises möglich. Dies ist insbesondere in einer schwarz-weißen Aufteilung der Bremskreise, in der beide Vorderradbremsen einem Bremskreis und beide Hinterradbremsen einem weiteren Bremskreis zugeordnet sind, vorteilhaft, weil dann aufgrund der dynamischen Achslastverlagerung bei einer Bremsung der Bremsdruck in optimierter Weise dosiert werden kann.

In die jeweilige Radbremsleitung ist vorteilhafterweise jeweils ein stromlos offenes Radventil geschaltet, welches von wenigstens einer Steuer- und Regeleinheit zum radindividuellen Druckaufbau in der jeweiligen Radbremse geöffnet wird. Zum Multiplexen werden die einzelnen Radventile geöffnet und geschlossen, um bedarfsgerecht radindividuell den gewünschten Bremsdruck einzustellen.

In die jeweilige Radbremsleitung ist vorzugsweise jeweils ein stromlos geschlossenes Zuschaltventil geschaltet. Dieses Ventil dient zur bedarfsweisen Trennung der Druckbereitstellungseinrichtung von der jeweiligen Radbremse bzw. ihre Zuschaltung, wenn die Druckbereitstellungseinrichtung Druck in der Radbremse aufbauen soll.

Bei einem Ausfall einer Druckbereitstellungseinrichtung schalten die Zuschaltventile in den Radbremsleitungen, durch die die ausgefallene Druckbereitstellungseinrichtung mit den Radbremsen verbunden ist, bevorzugt stromlos in ihre Trennstellung.

Die jeweilige Druckbereitstellungseinrichtung weist in einer ersten bevorzugten Variante genau einen Druckraum und einen zum Druckaufbau darin hinein verfahrbaren Kolben auf.

In einer zweiten bevorzugten Variante weist die jeweilige Druckbereitstellungseinrichtung zwei Druckkammern auf, wobei die erste Druckkammer mit einer Radbremse des ersten Bremskreises und die zweite Druckkammer mit einer Radbremse des gleichen Bremskreises hydraulisch verbunden oder verbindbar ist. Die jeweilige Druckbereitstellungseinrichtung weist somit vorzugsweise zwei Druckkammern auf, wobei jede der beiden Druckkammern mit einer anderen Bremse des gleichen Bremskreises hydraulisch verbunden oder verbindbar ist.

Gegenüber der zweiten beschriebenen Variante hat die erste Variante den Vorteil, dass weniger Bauteile benötigt werden und die Konstruktion der Druckbereitstellungseinrichtung einfacher ist als im zweiten Fall. Bei der hier vorgeschlagenen Bremsanlage gemäß der ersten Variante ist auch eine Zweikreisigkeit gegeben.

In der Normalbetriebsart sind bevorzugt jedem Bremskreise zwei Radbremsen zugeordnet, die an der gleichen Fahrzeugachse bremsen, wodurch die dynamische Achslastverlagerung präzise bei der Ansteuerung der Druckbereitstellungseinrichtungen berücksichtigt werden kann.

Bevorzugt ist eine Betätigungsvorrichtung vorgesehen, die mit den Radbremsen hydraulisch verbindbar ist und durch die der Fahrer bei Betätigung des Bremspedals durch Muskelkraft Druck in den Radbremsen aufbauen kann. Die Betätigungseinheit ist vorteilhafterweise als Tandemhauptbremszylinder ausgebildet.

In Bezug auf das Verfahren wird die oben genannte Aufgabe erfindungsgemäß dadurch gelöst, dass in dem Normalfall, dass von beiden Druckbereitstellungseinrichtungen Druck aufgebaut werden kann, jeweils in zwei einem Bremskreis zugeordneten Radbremsen Druck von jeweils einer der beiden Druckbereitstellungseinrichtungen aufgebaut wird.

Bei Ausfall genau einer Druckbereitstellungseinrichtung wird diese bevorzugt von den Radbremsen, in denen sie im Normalfall Druck aufbaut, getrennt, wobei hydraulisch eine Verbindung von wenigstens einer Radbremsleitung, die mit der nicht ausgefallenen Druckbereitstellungseinrichtung verbunden ist, zu einer von der Druckbereitstellungseinrichtung abgetrennten Radbremse hergestellt wird, so dass die noch funktionierende Druckbereitstellungseinrichtung in diesen Radbremsen Druck aufbauen kann.

Bei Ausfall beider Druckbereitstellungseinrichtungen werden vorteilhafterweise beide Druckbereitstellungseinrichtungen jeweils hydraulisch von den Radbremsen getrennt, wobei in diesem Fall eine mit einem Bremspedal betätigbare Betätigungseinheit hydraulisch mit den Radbremsen verbunden wird, mit deren Hilfe der Fahrer durch Betätigung des Bremspedals Bremsflüssigkeit in die Radbremsen verschieben kann.

Die Vorteile der Erfindung liegen insbesondere darin, dass durch die Verwendung der noch intakten Druckbereitstellungseinrichtung bei Ausfall der anderen Druckbereitstellungseinrichtung eine zusätzliche Rückfallebene bereitgestellt wird, in der noch eine radindividuelle Bremsdruckregelung aller vier Radbremsen möglich ist. Dies bedeutet, dass nicht nur eine redundante By-Wire-Normalbremsfunktion sondern auch eine redundante ABS-Funktionalität zur Verfügung gestellt wird. Diese Funktionalität ist sowohl für den Fahrer als auch für sonstige Bremsregelfunktionen verfügbar. Durch die zusätzliche Rückfallebene mit einer Druckbereitstellungseinrichtung verändert sich nicht die Pedalcharakteristik, wodurch Irritationen des Fahrers vermieden werden.

Bei Ausfall beider Druckbereitstellungseinrichtungen ist zusätzlich eine weitere Rückfallebene verfügbar, in der der Fahrer durch Muskelkraft Bremsflüssigkeit in die Radbremsen verschiebt. Durch die redundante By-Wire-Bremsfunktion und die redundante radindividuelle Radbremsdruckregelung für alle vier Radbremsen ist das erfindungsgemäße Bremssystem ideal für den Einsatz zum hochautomatisierten Fahren geeignet, da es die erforderliche Redundanz in vollem Umfang bereitstellt.

Durch erfindungsgemäße hydraulische Verschaltung kann die Aufteilung in der Normalbetriebsart und in der Rückfallebene anders gewählt werden, so dass jeweils die vorteilhafte Verteilung (achsweise im Normalfall, diagonal in der Rückfallebene) verwendet werden kann.

Ein Ausführungsbeispiel der Erfindung wird anhand einer Zeichnung näher erläutert. Darin zeigen in stark schematisierter Darstellung:
- FIG. 1: ein hydraulisches Schaltbild einer Bremsanlage mit zwei Druckbereitstellungseinrichtungen in einer bevorzugten Ausführungsform im stromlosen Zustand;
- FIG. 2: ein hydraulisches Schaltbild einer Bremsanlage mit zwei Druckbereitstellungseinrichtungen in einer weiteren bevorzugten Ausführungsform im hydraulischen Schaltzustand der Normalbetriebsart By-Wire;
- FIG. 3: die Bremsanlage gemäß FIG. 2 während einer beispielsgemäßen radindividuellen Bremsdruckregelung;
- FIG. 4: die Bremsanlage gemäß FIG. 2 in einer ersten Rückfallebene bei Ausfall einer der beiden Druckbereitstellungseinrichtungen;
- FIG. 5: die Bremsanlage gemäß FIG. 2 in der ersten Rückfallebene während einer beispielsgemäßen radindividuellen Bremsdruckregelung;
- FIG. 6: die Bremsanlage gemäß FIG. 2 in einer zweiten Rückfallebene bei Ausfall beider Druckbereitstellungseinrichtungen; und
- FIG. 7: ein hydraulisches Schaltbild einer Bremsanlage mit zwei Druckbereitstellungseinrichtungen in einer bevorzugten Ausführungsform im stromlosen Zustand ohne hydraulische Durchgriffsmöglichkeit.

Gleiche Teile sind in allen Figuren mit denselben Bezugszeichen versehen.

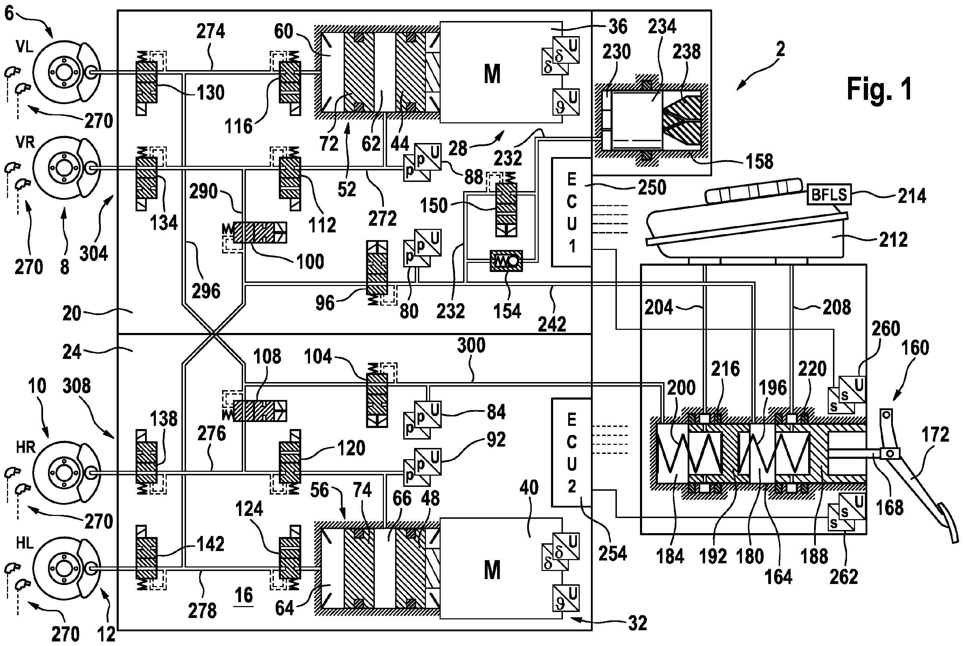

Eine in FIG. 1 dargestellte Bremsanlage 2 weist vier hydraulische Radbremsen 6, 8, 10, 12 auf, wobei vorliegend Radbremse 6 dem linken Vorderrad, Radbremse 8 dem rechten Vorderrad, Radbremse 10 dem rechten Hinterrad und Radbremse 12 dem linken Hinterrad zugeordnet sind. Die Bremsanlage 2 weist eine Hydraulikeinheit 16 auf, die in ein erstes Untermodul 20 und ein zweites Untermodul 24 gegliedert ist. Jedes der beiden Untermodule 20, 24 weist jeweils eine Druckbereitstellungseinrichtung 28, 32 auf. Diese ist jeweils als elektrohydraulischer Aktuator ausgebildet mit einem Elektromotor 36, 40, einer optionalen Rot-Rot-Getriebestufe (vorzugsweise mit einem Zahnriemen; nicht dargestellt), und einem Rotations-Translationsgetriebe (nicht dargestellt), welches die Rotation der Motorwelle in eine translatorische bzw. axiale Bewegung übersetzt. Das Rotations-Translationsgetriebe ist bevorzugt jeweils als Kugelgewindetrieb (KGT) ausgebildet.

Die jeweilige Druckbereitstellungseinrichtung 28, 32, weist weiterhin jeweils einen mit Hilfe des Elektromotors 36, 40 verschiebbaren Hydraulikkolben 44, 48 auf. Die Druckbereitstellungseinrichtung 28, 32 weist jeweils eine Druckkammer 52, 56 auf, in die der Hydraulikkolben 44, 48 jeweils verschiebbar ist. Durch eine Ansteuerung des Elektromotors 36, 40 erfolgt eine Verschiebung des Hydraulikkolbens 44, 48 in die jeweilige Druckkammer 52, 56, wobei die Drehung der Motorwelle über das Rotations-Translationsgetriebe in die axiale Verschiebung des jeweiligen Hydraulikkolbens 44, 48 umgesetzt wird.

In der jeweiligen Druckkammer 52, 56 sind jeweils zwei Druckräume 60, 62 bzw. 64, 66 gebildet, die jeweils von einem zweiten Hydraulikkolben 72, 74, der jeweils als Schwimmkolben ausgebildet ist, voneinander getrennt werden.

Ein erster Bremskreis 304 ist dadurch gebildet, dass Druckraum 60 der Druckkammer 52 hydraulisch mit der Radbremse 6 und Druckraum 62 der Druckkammer 52 hydraulisch mit der Radbremse 8 verbunden ist. Beide Radbremsen 6, 8 sind somit mit der gleichen Druckkammer 52 hydraulisch verbunden, wodurch ein hydraulischer Kreis gebildet wird, der im Rahmen dieser Anmeldung als Bremskreis bezeichnet wird und auch als Druckbereitstellungskreis bezeichnet werden kann. Die Radbremse 10 ist hydraulisch mit dem Druckraum 66 der Druckkammer 56 und die Radbremse 12 mit dem Druckraum 64 der Druckkammer 56 verbunden, wodurch ein zweiter Bremskreis 308 gebildet wird.

Jedem der beiden Untermodule 20, 24 ist jeweils ein Drucksensor 80, 84 zugeordnet, mit dem der Fahrereingangsdruck gemessen wird sowie ein weiterer Drucksensor 88, 92, mit dem der Aktuator- bzw. Systemdruck gemessen wird. Dem Untermodul 20 sind ein erstes Trennventil 96 und ein zweites Trennventil 100 zugeordnet, beide Trennventile sind stromlos offen. Dem Untermodul 24 sind ein drittes Trennventil 104 und ein viertes Trennventil 108 zugeordnet, die beide stromlos offen sind. Dem Untermodul 20 sind ein erstes stromlos geschlossenes Zuschaltventil 112 und ein zweites stromlos geschlossenes Zuschaltventil 116 zugeordnet; dem Untermodul 24 sind ein drittes stromlos geschlossenes Zuschaltventil 120 und ein viertes stromlos geschlossenes Zuschaltventil 124 zugeordnet.

Jeder Radbremse 6, 8, 10, 12 ist jeweils ein stromlos offenes Radventil 130, 134, 138, 142 zugeordnet, das in geöffnetem Zustand den Fluss von Bremsflüssigkeit in die jeweilige Radbremse 6-10 erlaubt bzw. dessen Rückfluss erlaubt und im gesperrtem bzw. geschlossenen Zustand die Bremsflüssigkeit in der jeweiligen Radbremse 6-10 halten. In Untermodul 20 sind weiterhin ein stromlos geschlossenes Simulatorventil 150 und ein hydraulisch zu diesem parallel geschaltetes Rückschlagventil 154 angeordnet. Dem Untermodul 20 ist zudem ein Pedalsimulator 158 zugeordnet.

Die Bremsanlage 2 weist eine Betätigungseinheit 160 auf, umfassend einen Tandemhauptbremszylinder 164, der über eine Kolbenstange 168 durch ein Bremspedal 172 betätigt werden kann. Der Tandemhauptbremszylinder 164 weist zwei Druckkammern 180, 184 auf, in die jeweils ein Druckkolben 188, 192 verschoben werden kann. In der jeweiligen Druckkammer 180, 184 ist jeweils ein elastisches Rückstellelement 196, 200 angeordnet, das als Feder ausgebildet ist und wodurch der Druckkolben 188, 192 jeweils bei nicht betätigtem Bremspedal 172 in seine Ausgangsstellung zurückverschoben wird. Die jeweilige Druckkammer 180, 184 ist jeweils über eine hydraulische Leitung 204, 208 mit einem Bremsflüssigkeitsvorratsbehälter 212 verbunden bzw. verbindbar. Manschettendichtungen 216, 220 sperren die hydraulische Verbindung zum Bremsflüssigkeitsvorratsbehälter 212 im betätigten Zustand des Tandemhauptbremszylinders 164 und geben diese im unbetätigten Zustand frei. Der Bremsflüssigkeitsvorratsbehälter 212 ist mit einem Bremsflüssigkeitslevelsensor 214 ausgestattet.

Die Betätigungseinheit 160 ist vorzugsweise von der Hydraulikeinheit 16 baulich getrennt und mit ihr durch Hydraulikleitungen und elektrische Sensorverbindungen verbunden. Die Betätigungseinheit 160 kann wie bei konventionellen Bremsbetätigungen üblich am Pedal angebunden werden und wie in üblicher Weise an der Fahrzeugtrennwand zwischen Fahrgastraum und Motorraum befestigt werden.

Die Hydraulikeinheit mit den Untermodulen 20, 24 kann durch eine vorzugsweise bauliche Trennung beliebig an einem geeigneten freien Raum im Fahrzeug angeordnet werden. Dies bietet u.a. Vorteile für NVH (Noise Vibration Harshness: Geräusch, Vibration, Rauheit) und eine flexible Integration in das Fahrzeugpackage. Bei einer optimierten Anordnung der Hydraulikeinheit im Fahrzeug bzw. im Motorraum und ggf. optimierter Entkopplung bzw. Dämpfung können wahrnehmbare oder störende Geräusche der Aktuatoren, wie Ventile oder Druckerzeuger, im Fahrgastraum vermieden werden.

Der Pedalsimulator 158 weist einen hydraulischen Druckraum 230, in den bei einem Normalbetrieb der Bremsanlage im By-Wire-Betrieb Bremsflüssigkeit aus der Druckkammer 180 durch eine hydraulische Simulatorleitung 232 gegen einen Kolben 234 und die Kraft eines elastischen Simulatorelements 238 verschoben wird. Die Simulatorleitung 232 ist hydraulisch mit einer hydraulischen Leitung 242 verbunden, welche in die Druckkammer 180 führt.

Dem Untermodul 20 sind die Radbremsen 6, 8 der Vorderachse zugeordnet, wobei die Radbremse 6 vorne linke (VL) bremst und die Radbremse 8 vorne rechts (VR) bremst. Dem Untermodul 24 sind die Radbremsen 10, 12 an der Hinterachse zugeordnet, wobei die Radbremse 10 hinten rechts (HR) und die Radbremse 12 hinten links (HL) bremst.

Jedem Untermodul 20, 24 ist jeweils eine elektronische Steuer- und Regeleinheit (ECU) 250, 254 zugeordnet. Der Bremsflüssigkeitslevelsensor 214 ist an wenigstens eine der beiden Steuer- und Regeleinheiten 250, 254 signaleingangsseitig angebunden. In der Betätigungseinheit 160 sind Pedalwegsensoren 260, 262 angeordnet, die jeweils mit wenigstens einer der ECUs verbunden sind. Die Pedalwegsensoren 260, 262 sind bevorzugt jeweils redundant ausgebildet.

Wenigstens mit einer der beiden ECUs sind, bevorzugt redundant ausgeführte, Raddrehzahlsensoren 270 signaleingangsseitig verbunden. Die Raddrehzahlsensoren 270 sind bevorzugt jeweils als doppeltes Sensorelement in jeweils einem Radsensorgehäuse ausgeführt. Diese Bauweise ermöglicht die Beibehaltung der bei Kraftfahrzeugen, insbesondere PKW, üblichen mechanisch verbauten Anzahl von vier Raddrehzahlsensormodulen am Radträger. Alternativ können auch acht einfache standardmäßige Raddrehzahlsensoren verbaut werden. Die redundanten Raddrehzahlsensorinformationen bzw. -signale sind bevorzugt jeweils den beiden ECUs zugeordnet, so dass jeder ECU unabhängig von der anderen die Radrehzahlinformationen zur Verfügung stehen.

In der Normalbetriebsart By-Wire wird Druck in den Radbremsen 6-10 mit Hilfe der beiden Druckbereitstellungseinrichtungen 28, 32 aufgebaut. Eine hydraulische Radbremsleitung 272, in die das erste Zuschaltventil 112 geschaltet ist, verbindet dazu Druckraum 62 mit der Radbremse 8. Eine hydraulische Radbremsleitung 274, in die das zweite Zuschaltventil 116 geschaltet ist, verbindet Druckraum 60 mit der Radbremse 6. Eine hydraulische Radbremsleitung 276, in die das dritte Zuschaltventil 120 geschaltet ist, verbindet Druckraum 66 mit der Radbremse 10. Eine hydraulische Radbremsleitung 278, in die das vierte Zuschaltventil 124 geschaltet ist, verbindet den Druckraum 64 mit der Radbremse 12.

Eine erste hydraulische Verbindungsleitung 290, in die das zweite Trennventil 100 geschaltet ist, verbindet die hydraulischen Leitungen 272 und 278. Eine zweite hydraulische Verbindungsleitung 296, in die das vierte Trennventil 108 geschaltet ist, verbindet die hydraulischen Leitungen 274 und 276. Eine hydraulische Leitung 300 verbindet Druckraum 184 mit der Leitung 296.

Beispielsgemäß verbindet eine erste hydraulische Verbindungsleitung 290, in die ein stromlos offenes Trennventil 100 geschaltet ist, eine der Radbremsleitungen (272) des ersten Bremskreises 304 mit einer der Radbremsleitungen (278) des zweiten Bremskreises 308, und eine zweite hydraulische Verbindungsleitung 296, in die ein stromlos offenes Trennventil 108 geschaltet ist, verbindet die andere Radbremsleitung 274 des ersten Bremskreises 304 mit der anderen Radbremsleitung 276 des zweiten Bremskreises 308.

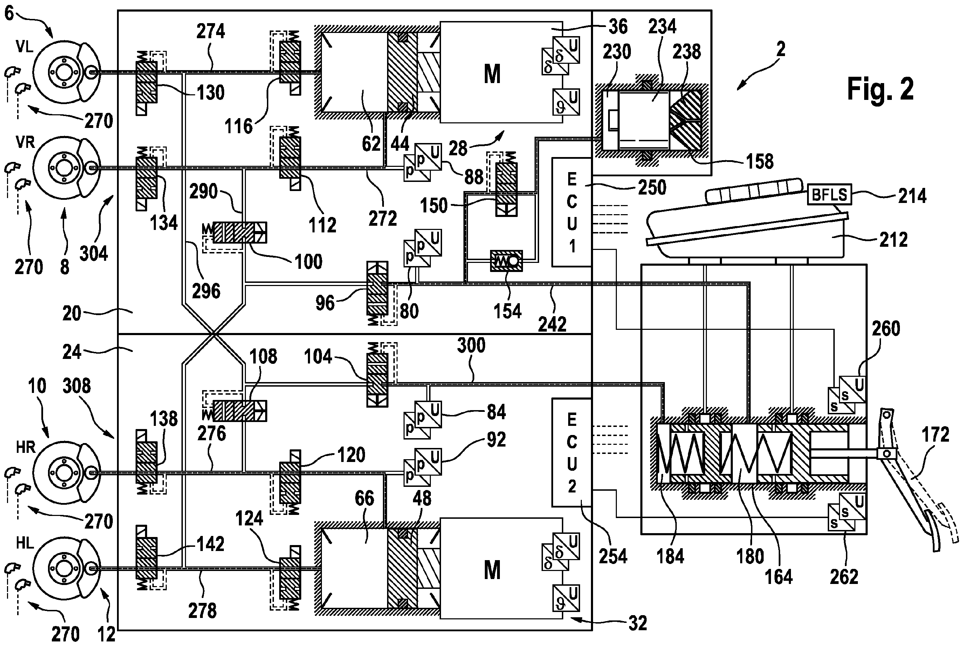

Eine zweite bevorzugte Ausführung einer Bremsanlage 2 in FIG. 2 in dem Normalbetriebszustand By-Wire dargestellt. Diese Ausführungsform unterscheidet sich von der in FIG. 1 dargestellten Ausführungsform dahingehend, dass die Druckbereitstellungseinrichtungen 28, 32, die hier sowie bei der in FIG. 1 dargestellten Variante als Linearaktuatoren ausgebildet sind, nur jeweils einen Druckraum 62, 66 aufweisen; ein Schwimmkolben, durch den ein zweiter Druckraum gebildet wird, ist hier nicht vorhanden. Diese Ausbildung bietet die Vorteile einer kleineren Baulänge und weniger Bauteilen. Bei der Ausführung mit Schwimmkolben besteht der Vorteil einer hydraulischen Abtrennung der Radbremskreise gegeneinander. Dies ist jedoch nicht zwingend erforderlich, da das Bremssystem bzw. die Bremsanlage 2 auch ohne Schwimmkolben noch mindestens zweikreisig ausgelegt ist.

In der in FIG. 2 dargestellten Normalbremsbetriebsart Brake-by-Wire werden die Trennventile 96, 104 in jeweils ihre Trennstellung geschaltet, so dass der Tandemhauptbremszylinder 164 von der restlichen Bremsanlage 2 hydraulisch abgetrennt wird. Das Simulatorventil 150 wird in seine Durchgangsstellung geschaltet, so dass der Simulator 158 hydraulisch mit der Druckkammer 180 verbunden wird. Bei Betätigung des Bremspedals 172 verschiebt der Fahrer Druckmittel aus der Druckkammer 180 in dem Druckraum 230 des Simulators 158, der eine geeignete Kraft-Weg-Charakteristik des Bremspedals erzeugt. Die beiden Trennventile 100, 108 werden in ihre Trennstellung geschaltet. Hierdurch erfolgt eine Kreistrennung in einen ersten Bremskreis 304, der die beiden Radbremsen 6, 8 umfasst und einen zweiten Bremskreis 308, der die beiden Radbremsen 10, 12 umfasst.

Die Zuschaltventile 112, 116, 120, 124 werden in ihre Durchgangsstellung geschaltet und somit geöffnet. Die Druckbereitstellungseinrichtung 28 ist somit hydraulisch mit den Radbremsen 6, 8 verbunden und die Druckbereitstellungseinrichtung 32 ist mit den Radbremsen 10, 12 verbunden. Die Aufteilung der Bremskreise in dieser Konfiguration ist somit "schwarz/weiß". Mit Hilfe der Pedalwegsensoren 260, 262 wird der Kolbenweg bzw. Bremspedalweg erfasst und von den Steuer- und Regeleinheiten 250, 254 jeweils verarbeitet.

Die Drucksensoren 80, 84 erfassen jeweils den vom Fahrer erzeugten Bremsdruck, der in Steuer- und Regeleinheiten 250, 254 verarbeitet wird. Dort wird aus den Druck- und Pedalweginformationen ein Fahrerbremswunsch ermittelt, der als Systemsolldruck für die beiden Bremskreise 304, 308 vorgegeben wird. Alternativ zu der Ermittlung des Bremswunsches kann auch in wenigstens einer ECU selbst oder elektrisch von außen über eine Kommunikationsverbindung übermittelt ein Systemsolldruck generiert werden.

Dieser Systemsolldruck wird von den elektrohydraulischen Linearaktuatoren bzw. Druckbereitstellungseinrichtungen 28, 32 in einen hydraulischen Druck umgesetzt, welcher auf die Radbremsen 6-12 wirkt und die gewünschte Bremswirkung erzeugt. Dieser Systemdruck bzw. Bremskreisdruck wird jeweils mit den Drucksensoren 88, 92 erfasst. Da vorliegend jeweils eine Druckbereitstellungseinrichtung 28, 32 einer Achse bzw. den dortigen Radbremsen 6, 8 bzw. 10, 12 zugeordnet ist, kann der Bremsdruck achsweise variiert werden.

Durch Verfahren der Kolben der Druckbereitstellungseinrichtungen 28, 32 kann analog, stufenlos und geräuscharm achsweise der Bremsdruck variiert werden. Es kann also zur Beeinflussung des Fahrverhaltens des Fahrzeuges die Bremskraftverteilung achsweise völlig frei variiert werden, um beispielsweise eine ideale Bremskraftverteilung gemäß der Achslastverlagerung beim Bremsen zu erzeugen, oder um gegebenenfalls vorhandenes Generatorbremsmoment (im Rahmen von Rekuperation bei einem Hybridfahrzeug oder einem Elektrofahrzeug) an einer oder beiden Achsen entsprechend hydraulisch auszugleichen und stufenlos anzupassen.

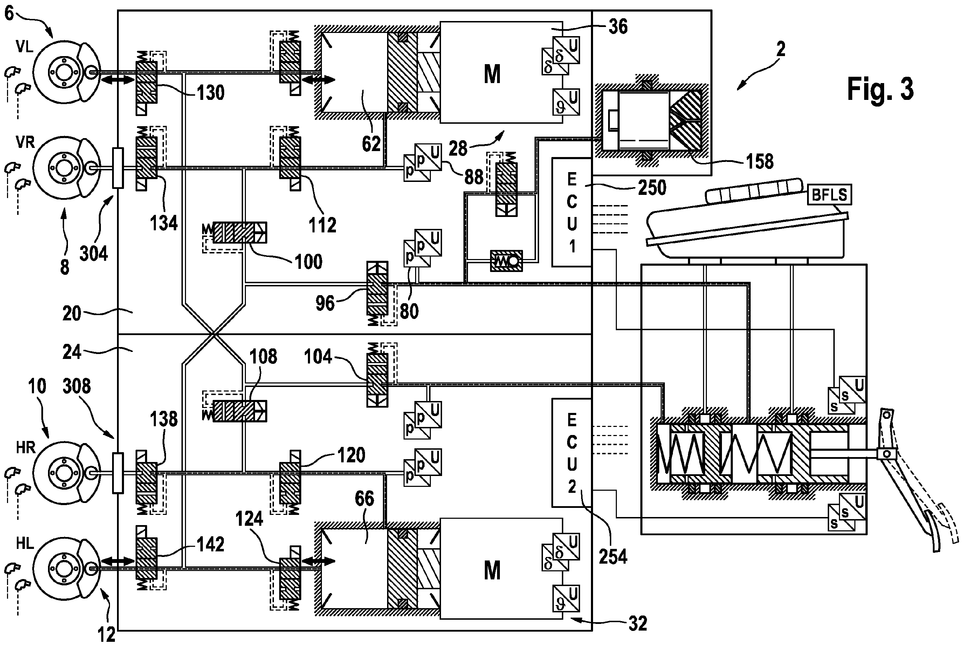

In FIG. 3 ist beispielsgemäß eine radindividuelle Druckmodulation bei der Bremsanlage 2 gemäß FIG. 2 dargestellt. Die radindividuelle Druckmodulation erfolgt mit Hilfe der Radventile 130, 134, 138, 142. Zur radindividuellen Druckmodulation wird im normalen Betrieb achsweises Multiplexen eingesetzt. Dies bietet gegenüber bekannten Systemen, bei denen eine Druckbereitstellungseinrichtung alle vier oder mehr Radbremsen durch Multiplexen bedienen muss, erhebliche funktionale Vorteile, da vorliegend weniger, also nur zwei Radbremsen pro Druckbereitstellungseinrichtung, bedient werden müssen, wobei dies achsweise geschieht. Dadurch entstehen zeitliche Vorteile in der sequentiellen Abarbeitung der Räder bzw. Radbremsen 6, 8, 10, 12 beim Multiplexen. Je mehr Radbremsen von einer Druckbereitstellungseinrichtung sequentiell abgearbeitet werden müssen, desto länger dauert ein Durchgang aller Radbremsen und desto problematischer wird es für die Bremsregelfunktionen, zeitgenau den jeweiligen Radbremsdruck einzustellen. Im schlechtesten Fall entsteht durch den Zeitverzug der sequentiellen Abarbeitung sogar ein negativer Einfluss auf das Fahrzeugverhalten bzw. die Fahrzeugstabilität.

Die achsweise Aufteilung ist zudem besonders vorteilhaft, da Bremsdruckmodulationen oft auch achsweise notwendig sind bzw. durchgeführt werden. Dominierende Druckunterschiede können oftmals achsweise herrschen, wobei die Druckunterschiede zwischen links und rechts dann geringer ausfallen, was beispielsweise durch Achslastverlagerung oder unterschiedliche Bremsdruck-Bremsmomenten-Übersetzungen der Radbremsen an den Achsen bedingt sein kann.

Beim achsweisen Multiplexen, wie in FIG. 3 dargestellt, wird mit Hilfe der Radventile 130, 134, 138, 142 und entsprechender Volumenverschiebung bzw. Druckeinstellung durch die Druckbereitstellungseinrichtungen 28, 32 das jeweils geöffnete Radventil 130, 134, 138, 142 durchströmt und dort der gewünschte Radbremsdruck eingestellt. Es wird also bei unterschiedlichen Radzieldrücken an einer Achse das Radventil 130, 134, 138, 142 der Radbremse 6, 8, 10, 12, in der der Druck geändert werden soll, geöffnet und das Radventil 130, 134, 138, 142 der anderen Radbremse 6, 8, 10, 12, in der der Druck aktuell nicht geändert werden soll, geschlossen. In dieser Konfiguration wird dann der Druck an der Radbremse mit offenem Radventil von der Druckbereitstellungseinrichtung 28, 32 eingestellt. Dies erfolgt zum Druckaufbau durch Fahren des jeweiligen Kolbens in den Druckraum und zum Druckabbau durch entgegengesetztes Fahren des Kolbens.

Nach Erreichen des gewünschten Raddruckes in der Radbremse 6, 8, 10, 12 wird das Radventil 130, 134, 138, 142 wieder geschlossen und das Radventil 130, 134, 138, 142 der anderen Radbremse 6, 8, 10, 12 geöffnet, um dort einen geänderten Zieldruck einzustellen. So können im Wechsel vorliegend die linke vordere Radbremse 6 und die rechte vordere Radbremse 8 von der Druckbereitstellungseinrichtung 28 bedient werden bzw. der Druck moduliert werden. Im in der FIG. 3 dargestellten Zustand sind das Radventil 130 der vorderen linken Radbremse 6 geöffnet und das Radventil 134 der rechten vorderen Radbremse 8 geschlossen, so dass in der Radbremse 6 der Druck eingestellt werden kann.

Die rechte hintere Radbremse 10 und die linke hintere Radbremse 12 werden von der Druckbereitstellungseinrichtung 28 bedient. Im vorliegend gezeigten Zustand sind das Radventil 138 der hinteren rechten Bremse 10 geschlossen und das Radventil 142 der hinteren linken Radbremse 12 geöffnet, so dass in der Radbremse 12 bedarfsgemäß Druck eingestellt werden kann.

In der Regel wird die Raddruckmodulation im geeigneten Wechsel der Radbremsen 6, 8 bzw. 10, 12 an der jeweiligen Achse sequentiell durchgeführt. Es kann jedoch auch zielgerichtete Überschneidungen geben, bei denen zeitweise beide Radventile 130, 134 bzw. 138, 142 an einer Achse geöffnet werden, um geeignete Volumenflüsse zur Erlangung der Zieldrücke zu generieren.

Beim Ausfall eines Untermoduls 20, 24, beispielsweise durch Fehler in der Druckbereitstellungseinrichtung 28, 32, in der Steuer- und Regeleinheit 250, 254 und/oder der Energieversorgung, kann das jeweils andere intakte Untermodul die By-Wire-Bremsfunktion für den Fahrer oder andere Funktionen aufrechterhalten.

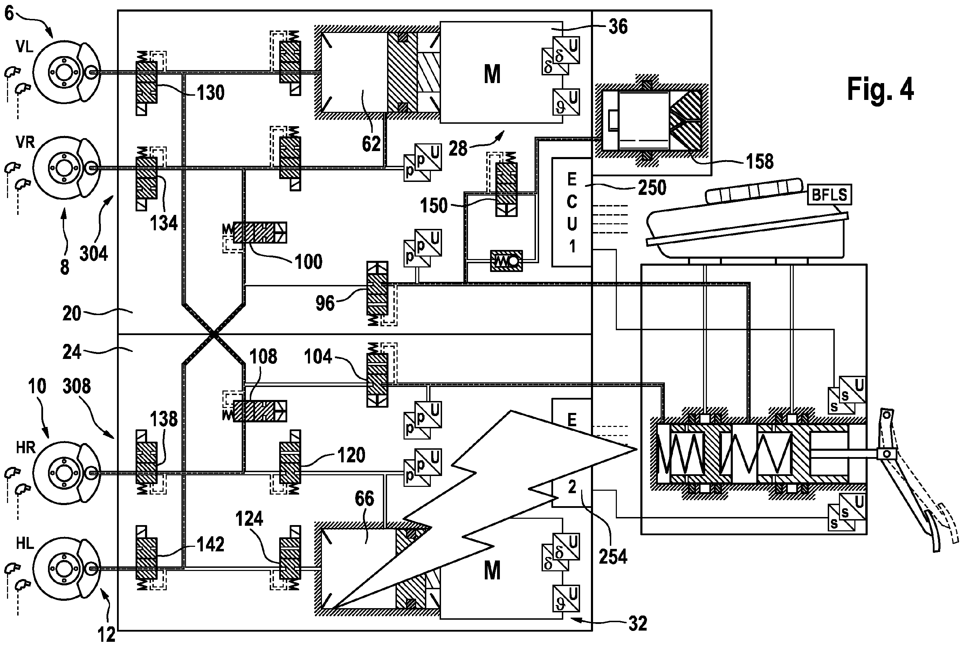

In FIG. 4 ist beispielhaft der Ausfall des Untermoduls 24 dargestellt. Die Zuschaltventile 120, 124 und die Radventile 138, 142 gehen stromlos in ihre Ausgangsstellung. Diese ist bei den Zuschaltventilen 120, 124 stromlos geschlossen und bei den Radventilen 138, 142 stromlos offen. Die Trennventile 96, 100, 104, 108 und das Simulatorventil 150 sind elektrisch mit beiden Steuer- und Regeleinheiten 250, 254 verbunden und somit von beiden ECUs elektrisch unabhängig schaltbar. Das bedeutet, jede ECU alleine kann diese Ventile schalten, oder beide ECUs gemeinsam schalten die beiden Ventile gemeinsam. Dies wird vorzugsweise durch eine doppelte Spulenwicklung für ein Elektromagnetventil realisiert, bei der zwei Spulendrähte gemeinsam aufgewickelt werden, die somit elektrisch unabhängig an zwei ECUs angeschlossen werden können. Somit ist es in der beispielhaften Darstellung gemäß FIG. 4 noch möglich, von der intakten Steuer- und Regeleinheit 250 die vier Trennventile 96, 100, 104, 108 und das Simulatorventil 150 elektrisch anzusteuern und zu schalten bzw. in normaler By-Wire-Schaltstellung geschaltet zu lassen wie dargestellt.

Es ergibt sich dadurch auch keine Irritation für den Fahrer durch Beeinflussung der Pedalcharakteristik, da die Betätigungseinheit 160 wie im fehlerlosen bzw. normalen By-Wire-Bremsbetrieb mit dem Pedalsimulator 158 hydraulisch verbunden ist. Durch die in FIG. 4 gezeigte Ventilschaltung ist es außerdem möglich, den erzeugten Bremsdruck der intakten Druckbereitstellungseinrichtung 36 zu allen vier Radbremsen 6, 8, 10 ,12 zu leiten und somit die gewünschte Bremsdruck- bzw. Verzögerungsvorgabe mit allen vier Radbremsen 6, 8, 10, 12 umzusetzen.

Mit der Bremsanlage 2 ist es darüber hinaus möglich, bei Ausfall eines Untermoduls 20, 24 mit dem jeweils anderen intakten Untermodul 20, 24 eine ABS-Funktion oder sonstige radindividuelle Bremsregelfunktionen für alle vier Radbremsen 6, 8, 10, 12 bereitzustellen. Auf diese Weise kann beispielsweise eine schlupfgeregelte ABS-Bremsung trotz Untermodulausfall auf allen vier Rädern ausgeführt werden. Dies trifft zu für vom Fahrer betätigte bzw. initiierte Bremsungen per Bremspedal als auch für anderweitig elektrisch angesteuerte Bremsregelfunktionen.

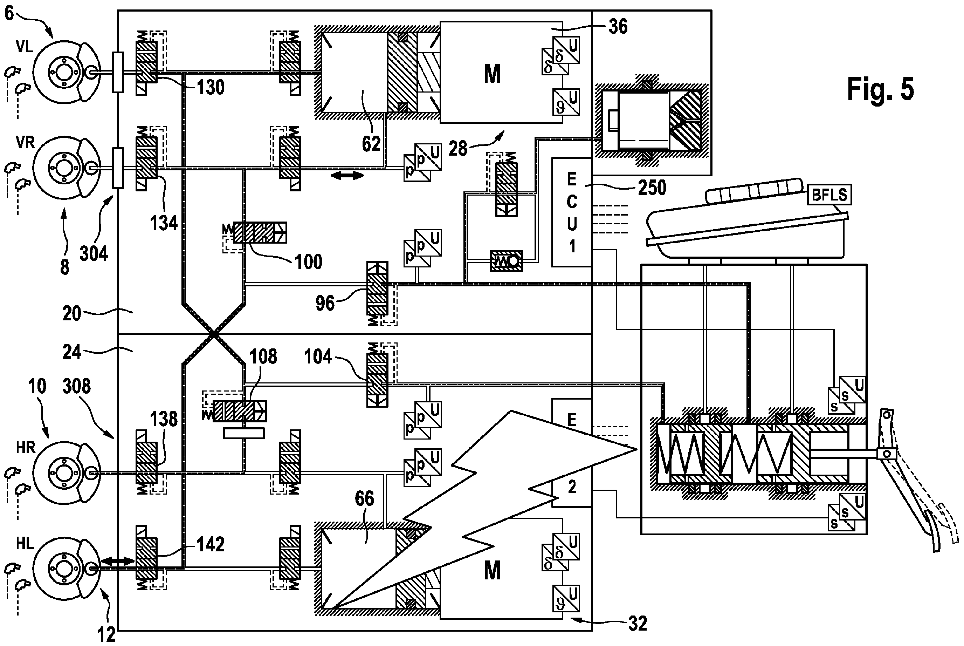

Wie in FIG. 5 dargestellt, übernimmt die intakte Druckbereitstellungseinrichtung 32 die Druckmodulation für alle vier Radbremsen 6, 8, 10, 12. Diese Betriebsart stellt eine Rückfallebene dar, in der die noch intakte Druckbereitstellungseinrichtung 28 eine radindividuelle Bremsruckregelung mit einer Multiplex-Druckregelung für alle vier Radbremsen 6, 8, 10, 12 durchführt. Diese Regelung erreicht zwar nicht die Performance der vorher besprochenen achsweisen Multiplexregelung, ist jedoch als Rückfallebene sehr gut geeignet. Hierzu werden die moduleigenen Radventile 130, 134 des intakten Untermoduls 20 genutzt, um die individuellen Vorderradrücke einzustellen. Zur Modulation der Hinterachs-Radbremsdrücke werden in dieser Betriebsart die Trennventile 100, 108 genutzt. Da diese elektrisch von beiden ECUs unabhängig schaltbar sind, können diese Ventile geschaltet werden unabhängig davon, welches Untermodul 20, 24 ausfällt, von der noch intakten ECU geschaltet werden. Im gezeigten Fall also von der Steuer- und Regeleinheit 250.

Im in der FIG. 5 gezeigten Zustand der Bremsanlage 2 sind die Radbremsen 6 (vorne links), 8 (vorne rechts) und 10 (hinten rechts) hydraulisch durch die Radventile 130, 134 und das Trennventil 108 von der Druckbereitstellungseinrichtung 28 abgetrennt. Nur die Radbremse 12 (hinten links) ist mit der Druckkammer der Druckbereitstellungseinrichtung 28 verbunden. In dieser Schaltkonstellation wird von der Druckbereitstellungseinrichtung 28 der Radbremsdruck der Radbremse 12 eingestellt. Nachdem in der Radbremse 12 der Zieldruck erreicht ist, wird gemäß dem Multiplex-Verfahren diese Radbremse durch Schließen des Trennventils 100 abgetrennt und die als nächstes priorisierte Radbremse mit der Druckkammer der Druckbereitstellungseinrichtung 28 verbunden, so dass in ihr der Zieldruck eingestellt werden kann.

Auf diese Weise ist es sequentiell möglich, in allen vier Radbremsen 6, 8, 10, 12 hydraulisch radindividuelle Bremsdrücke einzustellen und somit radindividuelle Bremsegelfunktionen wie beispielsweise ABS auszuführen. Zur geeigneten Radschlupfregelung werden die redundant zur Verfügung stehenden Raddrehzahlinformationen genutzt. Die beschriebene Redundanz der By-Wire-Bremsfunktion und der radindividuellen Radbremsdruckregelung funktioniert analog auch umgekehrt bei Ausfall des Untermoduls 20 mit dem intakten Untermodul 24.

Durch die redundante By-Wire-Bremsfunktion und die redundante radindividuelle Radbremsdruckregelung für alle vier Radbremsen 6, 8, 10 ,12 ist die Bremsanlage 2 für hochautomatisiertes fahren sehr gut geeignet, da es die erforderliche Redundanz in vollem Umfang bereitstellt. Die Bremsanlage 2 kann problemlos an zwei unabhängige Energieversorgungen angeschlossen werden und an zwei oder mehr unabhängige Kommunikationsverbindungen.

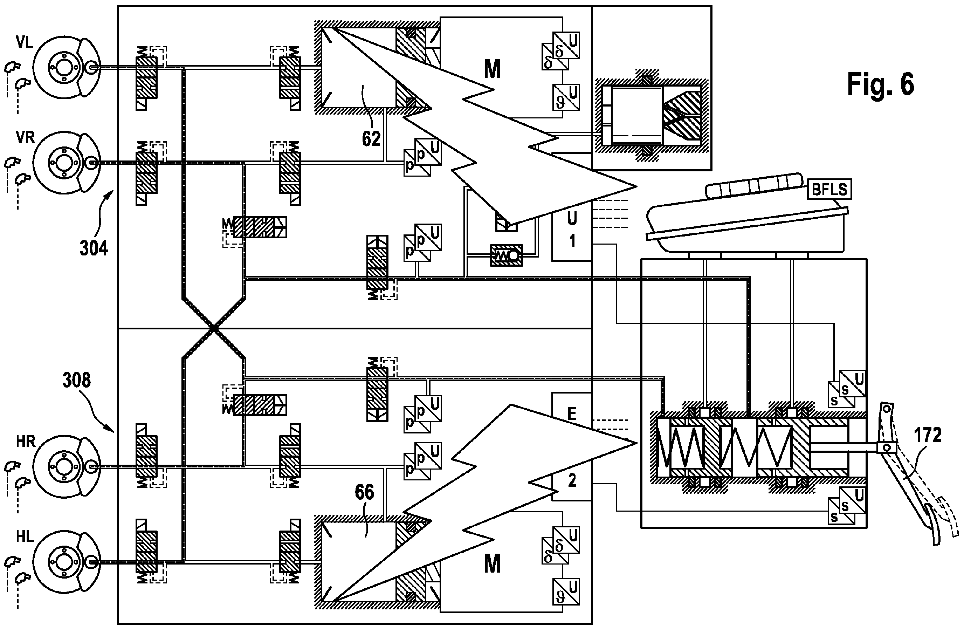

In der FIG. 6 ist die Bremsanlage 2 in der hydraulischen Fahrerrückfallebene dargestellt, bei der alle Elektromagnetventile wie dargestellt in ihre stromlose Schaltstellung fallen. Der Fahrer hat in dieser Konfiguration durch Betätigung des Bremspedals 172 bzw. des Hauptbremszylinders direkten hydraulischen Zugriff auf alle vier Radbremsen 6, 8, 10, 12. Die Bremskreisaufteilung in der gezeigten Rückfallebene ist diagonal. Dies kann vorteilhaft sein im Falle einer hydraulischen Leckage. Der By-Wire-Betrieb hingegen weist, wie oben dargestellt, eine achsweise Bremskreisaufstellung auf, was vorteilhaft für eine achsweise Druckstellung ist.

Die Bremsanlage 2 stellt also für die normale Betriebsart und die Rückfallebenen jeweils eine optimierte Bremskreisaufteilung bereit und löst auf diese Weise den Zielkonflikt der Bremskreisaufteilung. Ein weiterer Vorteil des erfindungsgemäßen Bremssystems ist, dass alle Komponenten, die in den Rückfallebenen genutzt werden, auch im Normalbetrieb in Benutzung sind, wodurch die Anforderungen der ECE-R-13-H erfüllt sind.

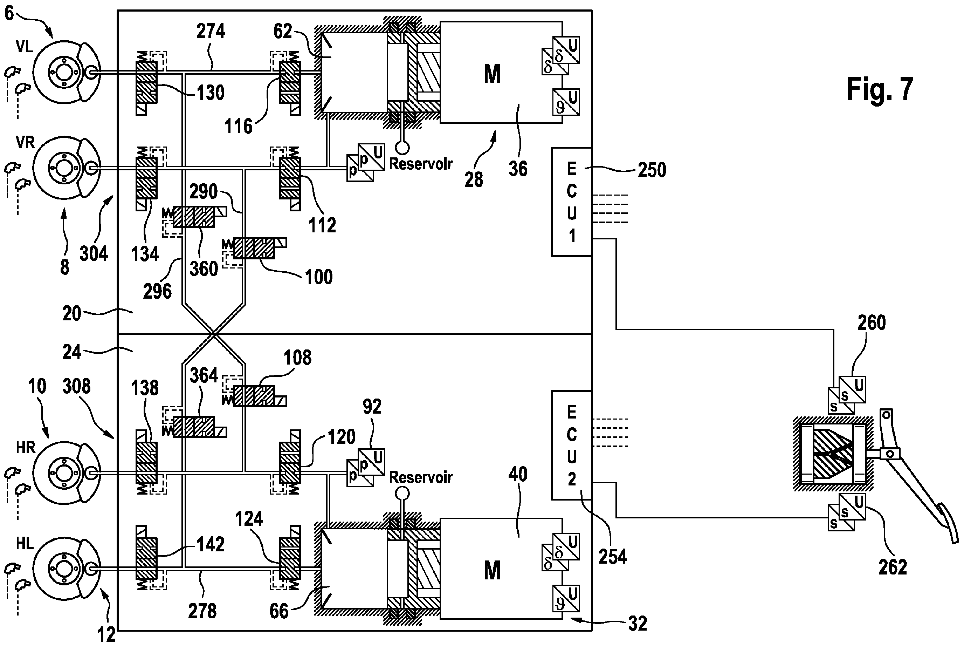

Die FIG. 7 schließlich zeigt eine Bremsanlage 2 ohne hydraulische Anbindung eines hydraulischen Hauptbremszylinders, insbesondere Tandemhautbremszylinders. Das heißt, in einer Rückfallebene wird vom Fahrer nicht durch Muskelkraft Bremsdruck in den Radbremsen 6, 8, 10 ,12 aufgebaut. Damit bei Ausfall einer der beiden Druckbereitstellungseinrichtungen 28, 32 noch von der verbleibenden Druckbereitstellungseinrichtung 28, 32 Druck radindividuell in allen vier Radbremsen 6, 8, 10, 12 eingestellt werden kann, sind Trennventile 360, 364 vorgesehen, die in jeweils eine Verbindungsleitung von einer Radbremsleitung des Untermoduls 20 zu einer Radbremsleitung der Untermoduls 24 führen. Das Trennventil 360 ist dabei in die Leitung 296 geschaltet, während das Trennventil 364 in die Leitung 290 geschaltet ist.

## Patentansprüche

1. Bremsanlage (2) für ein Kraftfahrzeug mit vier hydraulischen Radbremsen (6,8, 10 ,12), die jeweils einem Fahrzeugrad zugeordnet sind,
mit einem Bremspedal (172), dem eine Wegsensorik (260, 262) zur Bremswunscherkennung zugeordnet ist, und mit einer ersten (28) und einer zweiten Druckbereitstellungseinrichtung (32) zum Bremsdruckaufbau in den Radbremsen (6, 8, 10 ,12),
wobei die erste Druckbereitstellungseinrichtung (28) hydraulisch über eine zweite Radbremsleitung (274) mit einer einem ersten Bremskreis (304) zugeordneten ersten Radbremse (6) verbunden ist und über eine erste Radbremsleitung (272) hydraulisch mit einer dem ersten Bremskreis (304) zugeordneten zweiten Radbremse (8) verbunden ist, und wobei die zweite Druckbereitstellungseinrichtung (32) hydraulisch über eine zweite Radbremsleitung (276) mit einer einem zweiten Bremskreis (308) zugeordneten dritten Radbremse (10) verbunden ist und hydraulisch über eine erste Radbremsleitung (278) mit einer dem zweiten Bremskreis (308) zugeordneten vierten Radbremse (12) verbunden ist, wobei jede Druckbereitstellungseinrichtung (28, 32) jeweils von einer Steuer- und Regeleinheit (250, 254) angesteuert wird, **dadurch gekennzeichnet, dass**
eine erste hydraulische Verbindungsleitung (290), in die ein stromlos offenes Trennventil (100) geschaltet ist, die erste Radbremsleitung (272) des ersten Bremskreises (304) mit der ersten Radbremsleitung (278) des zweiten Bremskreises (308) verbindet, und dass eine zweite hydraulische Verbindungsleitung (296), in die ein stromlos offenes Trennventil (108) geschaltet ist, die zweite Radbremsleitung (274) des ersten Bremskreises (304) mit der zweiten Radbremsleitung (276) des zweiten Bremskreises (308) verbindet.

2. Bremsanlage (2) nach Anspruch 1, wobei in einer Normalbetriebsart, in der beide Druckbereitstellungseinrichtungen (28, 32) Bremsdruck aufbauen, wenigstens eine Steuer- und Regeleinheit (250, 254) die Trennventile (100, 108) in ihre Trennstellung schaltet, so dass jeweils eine Druckbereitstellungseinrichtung (28, 32) in Radbremsen (6, 8, 10 ,12) genau eines Bremskreises (304, 308) Druck aufbaut.

3. Bremsanlage (2) nach Anspruch 1 oder 2, wobei in die jeweilige Radbremsleitung (272, 274, 276, 278) jeweils ein stromlos offenes Radventil (130, 134, 138, 142) geschaltet ist, welches von wenigstens einer Steuer- und Regeleinheit (250, 254) zum radindividuellen Druckaufbau in der jeweiligen Radbremse (6, 8, 10, 12) geöffnet wird.

4. Bremsanlage (2) nach einem der Ansprüche 1 bis 3, wobei in die jeweilige Radbremsleitung (272, 274, 276, 278) jeweils ein stromlos geschlossenes Zuschaltventil (112, 116, 120, 124) geschaltet ist.

5. Bremsanlage (2) nach Anspruch 4, wobei bei einem Ausfall einer Druckbereitstellungseinheit (28, 32) die Zuschaltventile (112, 116, 120, 124) in den Radbremsleitungen (272, 274, 276, 278), durch die die ausgefallene Druckbereitstellungseinrichtung (28, 32) mit den Radbremsen (6, 8, 10, 12) verbunden ist, stromlos in ihre Trennstellung schalten.

6. Bremsanlage (2) nach einem der Ansprüche 1 bis 5, wobei die jeweilige Druckbereitstellungseinrichtung (28, 32) genau einen Druckraum (62, 66) und einen zum Druckaufbau darin hinein verfahrbaren Kolben (44, 48) aufweist.

7. Bremsanlage (2) nach einem der Ansprüche 1 bis 5, wobei die jeweilige Druckbereitstellungseinrichtung (28, 32) zwei Druckkammern (60, 62; 64, 66) aufweist, wobei jede der beiden Druckkammern mit einer anderen Radbremse (6, 8; 10, 12) des gleichen Bremskreises (304, 308) hydraulisch verbunden oder verbindbar ist.

8. Bremsanlage (2) nach entweder einem der Ansprüche 1 bis 5 oder nach Anspruch 6 oder nach Anspruch 7, wobei in der Normalbetriebsart jedem Bremskreis (304, 308) zwei Radbremsen (6, 8; 10, 12) zugeordnet sind, die an der gleichen Fahrzeugachse bremsen.

9. Bremsanlage (2) nach entweder einem der Ansprüche 1 bis 5 oder nach Anspruch 8, wobei eine Betätigungsvorrichtung (160) vorgesehen ist, die mit den Radbremsen (6, 8, 10 ,12) hydraulisch verbindbar ist und durch die der Fahrer bei Betätigung des Bremspedals (172) durch Muskelkraft Druck in den Radbremsen (6, 8, 10, 12) aufbauen kann.

10. Bremsanlage (2) nach Anspruch 9, wobei die Betätigungseinheit (160) als Tandemhauptbremszylinder ausgebildet ist.

11. Verfahren zum Betreiben einer Bremsanlage nach einem der Ansprüche 1 bis 10,
**dadurch gekennzeichnet, dass**
im Normalfall, wenn von beiden Druckbereitstellungseinrichtungen (28, 32) Druck aufgebaut werden kann, in den dem ersten Bremskreis (304) zugeordneten Radbremsen (6, 8) nur von der ersten Druckbereitstellungseinrichtung (28) Druck aufgebaut wird und in den dem zweiten Bremskreis (308) zugeordneten Radbremsen (10, 12) nur von der zweiten Druckbereitstellungseinrichtung (32) Druck aufgebaut wird.

12. Verfahren nach Anspruch 11, wobei bei Ausfall genau einer Druckbereitstellungseinrichtung (28, 32) diese von den Radbremsen (6, 8, 10, 12), in denen sie im Normalfall Druck aufbaut, getrennt wird, und wobei hydraulisch eine Verbindung von wenigstens einer Radbremsleitung (272, 274, 276, 278), die mit der nicht ausgefallenen Druckbereitstellungseinrichtung (28, 32) verbunden ist, zu einer von der Druckbereitstellungseinrichtung (28, 32) abgetrennten Radbremse (6, 8, 10, 12) hergestellt wird, so dass die noch funktionierende Druckbereitstellungseinrichtung (28, 32) in diesen Radbremsen (6, 8, 10, 12) Druck aufbauen kann.

13. Verfahren nach Anspruch 11 oder 12, wobei bei Ausfall beider Druckbereitstellungseinrichtungen (28, 32) beide Druckbereitstellungseinrichtungen (28, 32) jeweils hydraulisch von den Radbremsen (6, 8, 10, 12) getrennt werden, und wobei in diesem Fall eine mit dem Bremspedal (172) betätigbare Betätigungseinheit (160) hydraulisch mit den Radbremsen (6, 8, 10 ,12) verbunden wird, mit deren Hilfe der Fahrer durch Betätigung des Bremspedals (172) Bremsflüssigkeit in die Radbremsen (6, 8, 10 ,12) verschieben kann.

## Claims

1. Brake installation (2) for a motor vehicle, having four hydraulic wheel brakes (6, 8, 10, 12) which are assigned to in each case one vehicle wheel,
having a brake pedal (172), which is assigned a travel sensor arrangement (260, 262) for identifying a braking demand, and having a first (28) and a second pressure provision device (32) for building up brake pressure in the wheel brakes (6, 8, 10, 12), wherein the first pressure provision device (28) is hydraulically connected via a second wheel brake line (274) to a first wheel brake (6) assigned to a first brake circuit (304) and is hydraulically connected via a first wheel brake line (272) to a second wheel brake (8) assigned to the first brake circuit (304), and wherein the second pressure provision device (32) is hydraulically connected via a second wheel brake line (276) to a third wheel brake (10) assigned to a second brake circuit (308) and is hydraulically connected via a first wheel brake line (278) to a fourth wheel brake (12) assigned to the second brake circuit (308), wherein each pressure provision device (28, 32) is respectively activated by an open-loop and closed-loop control unit (250, 254),
**characterized in that**
a first hydraulic connecting line (290), into which an isolating valve (100) which is open when electrically deenergized is connected, connects the first wheel brake line (272) of the first brake circuit (304) to the first wheel brake line (278) of the second brake circuit (308), and **in that** a second hydraulic connecting line (296), into which an isolating valve (108) which is open when electrically deenergized is connected, connects the second wheel brake line (274) of the first brake circuit (304) to the second wheel brake line (276) of the second brake circuit (308).

2. Brake installation (2) according to Claim 1, wherein, in a normal operating mode, in which both pressure provision devices (28, 32) build up brake pressure, at least one open-loop and closed-loop control unit (250, 254) switches the isolating valves (100, 108) into their isolating position, such that in each case one pressure provision device (28, 32) builds up pressure in wheel brakes (6, 8, 10, 12) of exactly one brake circuit (304, 308).

3. Brake installation (2) according to Claim 1 or 2, wherein in each case one wheel valve (130, 134, 138, 142), which is open when electrically deenergized, is connected into the respective wheel brake line (272, 274, 276, 278), which wheel valve is opened by at least one open-loop and closed-loop control unit (250, 254) for the purposes of a wheel-specific build-up of pressure in the respective wheel brake (6, 8, 10, 12).

4. Brake installation (2) according to one of Claims 1 to 3, wherein in each case one sequence valve (112, 116, 120, 124) which is closed when electrically deenergized is connected into the respective wheel brake line (272, 274, 276, 278).

5. Brake installation (2) according to Claim 4, wherein, in the event of a failure of a pressure provision unit (28, 32), the sequence valves (112, 116, 120, 124) in the wheel brake lines (272, 274, 276, 278) by means of which the failed pressure provision device (28, 32) is connected to the wheel brakes (6, 8, 10, 12) switch, in an electrically deenergized state, into their isolating position.

6. Brake installation (2) according to one of Claims 1 to 5, wherein the respective pressure provision device (28, 32) has exactly one pressure space (62, 66) and one piston (44, 48) which is movable into said pressure space for the purposes of building up pressure.

7. Brake installation (2) according to one of Claims 1 to 5, wherein the respective pressure provision device (28, 32) has two pressure chambers (60, 62; 64, 66), wherein each of the two pressure chambers is hydraulically connected or connectable to a different wheel brake (6, 8; 10, 12) of the same brake circuit (304, 308).

8. Brake installation (2) according to either one of Claims 1 to 5 or according to Claim 6 or according to Claim 7, wherein, in the normal operating mode, each brake circuit (304, 308) is assigned two wheel brakes (6, 8; 10, 12) which impart a braking action on the same vehicle axle.

9. Brake installation (2) according to either one of Claims 1 to 5 or according to Claim 8, wherein an actuation apparatus (160) is provided which is hydraulically connectable to the wheel brakes (6, 8, 10, 12) and by means of which the driver can build up pressure in the wheel brakes (6, 8, 10, 12) when he or she actuates the brake pedal (172) by muscle force.

10. Brake installation (2) according to Claim 9, wherein the actuation unit (160) is formed as a tandem master brake cylinder.

11. Method for operating a brake installation according to one of Claims 1 to 10,
**characterized in that**,
in the normal situation, when pressure can be built up by both pressure provision devices (28, 32), pressure is built up in the wheel brakes (6, 8) assigned to the first brake circuit (304) only by the first pressure provision device (28), and pressure is built up in the wheel brakes (10, 12) assigned to the second brake circuit (308) only by the second pressure provision device (32).

12. Method according to Claim 11, wherein, in the event of failure of exactly one pressure provision device (28, 32), said pressure provision device is isolated from the wheel brakes (6, 8, 10, 12) in which it builds up pressure in the normal situation, and wherein a connection is hydraulically produced between at least one wheel brake line (272, 274, 276, 278) which is connected to the pressure provision device (28, 32) that has not failed and a wheel brake (6, 8, 10, 12) isolated with respect to the pressure provision device (28, 32), such that the pressure provision device (28, 32) that remains functional can build up pressure in said wheel brakes (6, 8, 10, 12) .

13. Method according to Claim 11 or 12, wherein, in the event of failure of both pressure provision devices (28, 32), both pressure provision devices (28, 32) are in each case hydraulically isolated from the wheel brakes (6, 8, 10, 12), and wherein, in this case, an actuation unit (160) actuatable by means of the brake pedal (172) is hydraulically connected to the wheel brakes (6, 8, 10, 12), with the aid of which actuation unit the driver can displace brake fluid into the wheel brakes (6, 8, 10, 12) by actuating the brake pedal (172).

## Revendications

1. Installation de freinage (2) pour un véhicule automobile comprenant quatre freins de roues hydrauliques (6, 8, 10, 12) qui sont chacun associés à une roue du véhicule,
comprenant une pédale de frein (172) à laquelle est associé un système de capteur de distance (260, 262) pour reconnaître un souhait de freinage, comprenant un premier (28) et un deuxième (32) dispositif de fourniture de pression pour augmenter la pression de freinage dans les freins de roues (6, 8, 10, 12),
le premier dispositif de fourniture de pression (28) étant connecté hydrauliquement par le biais d'une deuxième conduite de frein de roue (274) à un premier frein de roue (6) associé à un premier circuit de freinage (304) et étant connecté hydrauliquement par le biais d'une première conduite de frein de roue (272) à un deuxième frein de roue (8) associé au premier circuit de freinage (304), et le deuxième dispositif de fourniture de pression (32) étant connecté hydrauliquement par le biais d'une deuxième conduite de frein de roue (276) à un troisième frein de roue (10) associé à un deuxième circuit de freinage (308) et étant connecté hydrauliquement par le biais d'une première conduite de frein de roue (278) à un quatrième frein de roue (12) associé au deuxième circuit de freinage (308), chaque dispositif de fourniture de pression (28, 32) étant à chaque fois piloté par une unité de commande et de régulation (250, 254), **caractérisée en ce**
**qu'**une première conduite de liaison hydraulique (290), dans laquelle est branchée une soupape de coupure (100) ouverte en l'absence de courant, relie la première conduite de frein de roue (272) du premier circuit de freinage (304) à la première conduite de frein de roue (278) du deuxième circuit de freinage (308) et en ce qu'une deuxième conduite de liaison hydraulique (296), dans laquelle est branchée une soupape de coupure (108) ouverte en l'absence de courant, relie la deuxième conduite de frein de roue (274) du premier circuit de freinage (304) à la deuxième conduite de frein de roue (276) du deuxième circuit de freinage (308) .

2. Installation de freinage (2) selon la revendication 1, dans laquelle, dans un mode de fonctionnement normal dans lequel les deux dispositifs de fourniture de pression (28, 32) augmentent la pression de freinage, au moins une unité de commande et de régulation (250, 254) commute les soupapes de coupure (100, 108) dans leur position de coupure de telle sorte qu'un dispositif de fourniture de pression (28, 32) augmente à chaque fois la pression dans les freins de roues (6, 8, 10, 12) d'exactement un circuit de freinage (304, 308).

3. Installation de freinage (2) selon la revendication 1 ou 2, dans laquelle, dans la conduite de frein de roue respective (272, 274, 276, 278) est à chaque fois branchée une soupape de roue (130, 134, 138, 142) ouverte en l'absence de courant, laquelle est ouverte par au moins une unité de commande et de régulation (250, 254) pour augmenter la pression de manière individuelle pour chaque roue dans le frein de roue respectif (6, 8, 10, 12).

4. Installation de freinage (2) selon l'une quelconque des revendications 1 à 3, dans laquelle, dans la conduite de frein de roue respective (272, 274, 276, 278), est à chaque fois branchée une soupape de mise en circuit (112, 116, 120, 124) fermée en l'absence de courant.

5. Installation de freinage (2) selon la revendication 4, dans laquelle, en cas de panne d'une unité de fourniture de pression (28, 32), les soupapes de mise en circuit (112, 116, 120, 124) dans les conduites de freins de roues (272, 274, 276, 278), par lesquelles le dispositif de fourniture de pression en panne (28, 32) est connecté aux freins de roues (6, 8, 10, 12), commutent sans alimentation en courant dans leur position de coupure.

6. Installation de freinage (2) selon l'une quelconque des revendications 1 à 5, dans laquelle le dispositif de fourniture de pression respectif (28, 32) présente exactement un espace de pression (62, 66) et un piston (44, 48) pouvant être déplacé à l'intérieur de celui-ci pour augmenter la pression.

7. Installation de freinage (2) selon l'une quelconque des revendications 1 à 5, dans laquelle le dispositif de fourniture de pression respectif (28, 32) présente deux chambres de pression (60, 62 ; 64, 66), chacune des deux chambres de pression étant ou pouvant être connectée hydrauliquement à un autre frein de roue (6, 8 ; 10, 12) du même circuit de freinage (304, 308).

8. Installation de freinage (2) selon l'une quelconque des revendications 1 à 5, ou selon la revendication 6 ou selon la revendication 7, dans laquelle, dans le mode de fonctionnement normal, deux freins de roues (6, 8 ; 10, 12) sont associés à chaque circuit de freinage (304, 308) et freinent au niveau du même essieu du véhicule.

9. Installation de freinage (2) selon l'une quelconque des revendications 1 à 5 ou selon la revendication 8, dans laquelle un dispositif d'actionnement (160) est prévu, lequel peut être connecté hydrauliquement aux freins de roues (6, 8, 10, 12) et par le biais duquel le conducteur peut augmenter par la force musculaire la pression dans les freins de roues (6, 8, 10, 12) lors de l'actionnement de la pédale de frein (172).

10. Installation de freinage (2) selon la revendication 9, dans laquelle l'unité d'actionnement (160) est réalisée sous forme de maître-cylindre de freinage tandem.

11. Procédé pour faire fonctionner une installation de freinage selon l'une quelconque des revendications 1 à 10,
**caractérisé en ce que**
dans un cas normal, lorsque la pression peut être augmentée par les deux dispositifs de fourniture de pression (28, 32), la pression est augmentée dans les freins de roues (6, 8) associés au premier circuit de freinage (304) seulement par le premier dispositif de fourniture de pression (28) et la pression est augmentée dans les freins de roues (10, 12) associés au deuxième circuit de freinage (308) seulement par le deuxième dispositif de fourniture de pression (32).

12. Procédé selon la revendication 11, dans lequel, en cas de panne d'exactement un dispositif de fourniture de pression (28, 32), celui-ci est séparé des freins de roues (6, 8, 10, 12) dans lesquels il augmente la pression dans un cas normal, et dans lequel une connexion d'au moins une conduite de frein de roue (272, 274, 276, 278) qui est connectée au dispositif de fourniture de pression (28, 32) qui n'est pas en panne, est établie hydrauliquement avec un frein de roue (6, 8, 10, 12) séparé du dispositif de fourniture de pression (28, 32) de telle sorte que le dispositif de fourniture de pression (28, 32) fonctionnant encore puisse augmenter la pression dans ces freins de roues (6, 8, 10, 12).

13. Procédé selon la revendication 11 ou 12, dans lequel, en cas de panne des deux dispositifs de fourniture de pression (28, 32), les deux dispositifs de fourniture de pression (28, 32) sont chacun séparés hydrauliquement des freins de roues (6, 8, 10, 12) et dans lequel, dans ce cas, une unité d'actionnement (160) pouvant être actionnée avec la pédale de frein (172) est connectée hydrauliquement aux freins de roues (6, 8, 10, 12), et permet au conducteur, par actionnement de la pédale de frein (172), d'alimenter les freins de roues (6, 8, 10 12) en liquide de frein.
